# EUROPEAN PATENT SPECIFICATION

(11) **EP 0 720 945 B1**
(45) Date of publication and mention of the grant of the patent: **01.09.1999**
(21) Application number: 96300053.4
(22) Date of filing: 03.01.1996
(51) Int. Cl.: B63C 9/06, B63C 9/04, B64D 1/22

(54) **Liferaft**
Rettungsflosse
Radeau de sauvetage

(30) Priority: 05.01.1995 GB 9500182
(43) Date of publication of application: 10.07.1996
(73) Proprietor: Wardle Storeys (Safety & Survival Equipment) Limited, Barnoldswick BB18 6UT (GB)
(72) Inventor: Bell, Richard Edward, Dundrod, Crumlin, Co.Antrim BT29 4JF (GB)
(74) Representative: Knott, Stephen Gilbert

(56) References cited:
- AU-A- 8 108 075
- GB-A- 2 171 069
- US-A- 3 092 854
- US-A- 3 736 607
- US-A- 4 533 333

## Description

The invention relates to liferafts.

A common form of liferaft comprises a structure including a floor and an inflatable wall surrounding the floor. At least one water pocket is provided beneath the structure which fills with water on deployment of the liferaft in water to stabilise the liferaft. The filled water pocket in a deployed liferaft helps to stabilise the liferaft.

It is, however, a problem that, when such a liferaft is removed from the water, not only the weight of the liferaft must be moved but also the weight of water in the water pocket. This can make removal of the liferaft from water difficult, particularly when the liferaft is lifted by a helicopter or a crane.

According to the invention, there is provided a liferaft comprising a structure including a floor and an inflatable wall surrounding the floor, at least one water pocket being provided on the structure which fills with water on deployment of the liferaft in water to stabilise the liferaft, means being provided for emptying at least one pocket to reduce the weight of the liferaft on lifting the liferaft out of water.

In this way, the water is disposed of by use of the emptying means and so does not have to be lifted with the liferaft.

The following is a more detailed description of an embodiment of the invention, by way of example, reference being made to the accompanying drawings in which:-
Figure 1 is a perspective view of a liferaft having a tubular wall with water pockets depending from the lower edge of the wall and slack rigging lines connected between the water pockets and a lifting ring, and
Figure 2 is a similar view to Figure 1 but with the rigging lines tensioned.

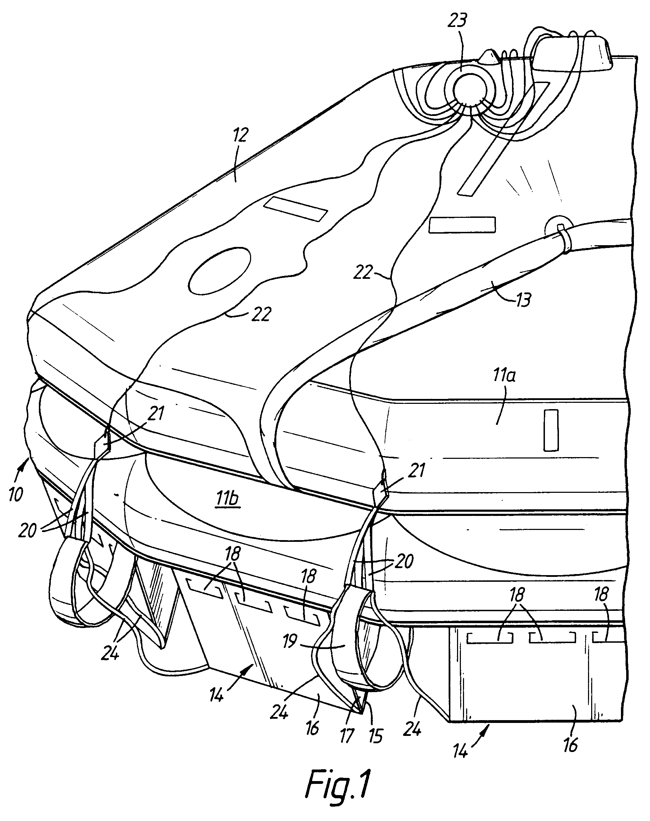

Referring first to Figure 1, the liferaft comprises an inflatable and inflated wall indicated generally at 10 and formed by two tubes 11a,11b arranged horizontally and superimposed one on top of the other. A floor (not shown) fills the area bounded by the tubes 11a,11b and is connected at its periphery to the lower edge of the lowermost 11b of the two tubes. A canopy 12 covers the liferaft and is provided with an entrance 13.

The tubes 11a,11b forming the wall 10 are polygonal and a water pocket 14 depends from each side section of the lowermost tube 11b. Each water pocket 14 has inner and outer walls 15,16 connected together at their lower edges and connected to the undersurface of the lowermost tube 11b at their upper edges. The side edges of the inner and outer walls 15,16 are interconnected by side walls 17.

Both the inner wall 15 and the outer wall 16 are provided towards their upper edges with apertures 18 to allow water into and out of the associated water pocket 14. As shown, there are three such apertures 18 in each wall 16,17, but there may be more or less apertures 18 as required.

A strip of material 19 is provided between each adjacent pair of water pockets 14. Each strip 19 has one end connected to the undersurface of the lowermost tube 11b and then loops around the outer surface of the lowermost tube 11b to an opposite end provided with a pair of straps 20 terminating at an eye 21. A rigging line 22 is connected between each eye 21 and a lifting ring 23 arranged above the canopy 12 so that all the rigging lines are connected to the ring 23. The free end of each strip 19 is also connected to two pocket lines 24. One pocket line 24 is connected at its other end to a corner of one of the pair of adjacent water pockets 14 while the other pocket line is connected to a corner of the other of the pair of adjacent water pockets 14.

When the liferaft shown in Figure 1 and described above is deployed in the water in its configuration shown in Figure 1, the water pockets 14 fill with water through the apertures 18. This helps to stabilise the liferaft, particularly in rough seas.

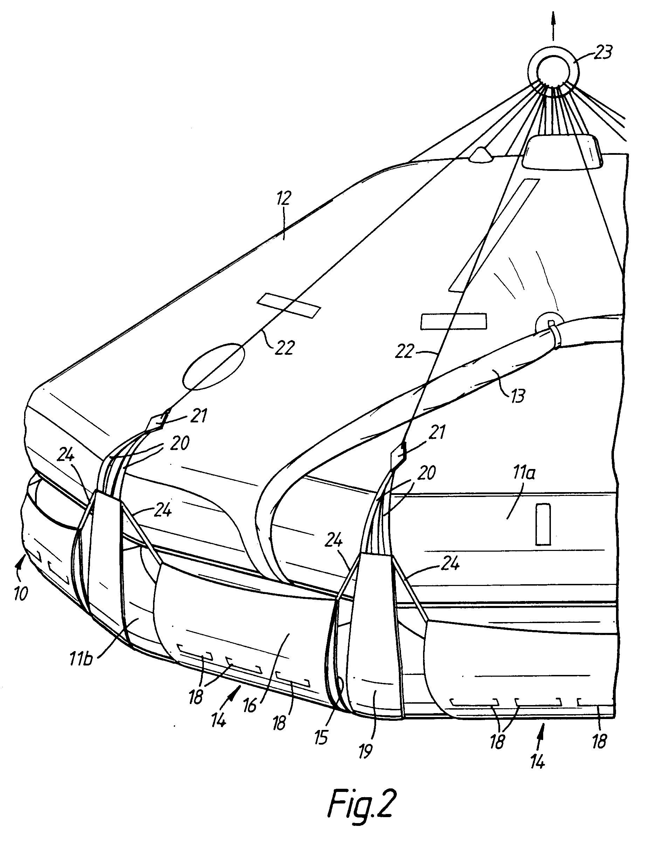

When the liferaft is to be lifted from the water, either by helicopter or by crane, a line from the crane or helicopter is attached to the lifting ring 23 and the liferaft is pulled upwardly. This tensions the rigging lines 22 and in turn tensions the straps 20 and the strips 19. This causes the straps 20 and strips 19 to move upwardly so pulling upwardly the pocket lines 24. This in turn causes the water pockets 14 to be lifted upwardly and pulled against the surface of the lowermost tube 11b. This disposition is shown in Figure 2.

The inversion of the water pockets 14 causes water to exit through the apertures 18, which are now at the lowermost part of the associated pockets 14. In addition, the pressing of the water pockets 14 against the lowermost tube 11 forces water out of the water pockets 14 through the apertures 18. Thus, as the liferaft is lifted from the water, the water pockets 14 are emptied and the weight to be lifted reduced correspondingly.

It will be appreciated that the means for emptying the water pockets need not be as described above. The water pockets 14 could be simply inverted without being pressed against the lowermost tube 11b. In addition, the force required to invert the water pockets 14 need not be provided directly via the rigging lines 22. It could be operated manually or mechanically from within the liferaft.

The means for emptying the pockets could comprise a valve in each pocket 14 which is opened as the liferaft is lifted out of the water to allow the egress of water within the associated pocket 14.

## Claims

1. A liferaft comprising a structure including a floor and an inflatable wall (10) surrounding the floor, at least one water pocket (14) being provided on the structure which fills with water on deployment of the liferaft in water to stabilise the liferaft, there being provided means (19,20,22,24) for emptying the at least one water pocket (14) to reduce the weight of the liferaft on lifting the liferaft out of water characterized in that a lifting device (23) is provided by which the liferaft can be lifted out of the water, said lifting device (23) being operatively connected to said emptying means (19,20,22,24) so that lifting of said liferaft by said lifting means (23) operates said emptying means to empty the at least one water pocket (14).

2. A liferaft according to claim 1, wherein the at least one water pocket (14) hangs beneath the structure when the liferaft is deployed in water, the water pocket (14) including at least one water inlet (18) at an upper end thereof and the emptying means (19,20,22,24) expelling water through said at least one inlet.

3. A liferaft according to claim 1 or claim 2 wherein said emptying means (19,20,22,24) lift said water pocket (14) to empty said water pocket (14).

4. A liferaft according to any one of claims 1 to 3, wherein the inflatable wall includes a tubular section (11b) with the at least one water pocket (14) being disposed adjacent said tubular section, the emptying means (19,20,22,24) causing the at least one water pocket (14) to be pressed against said tubular section (11b) to expel water therefrom.

5. A liferaft according to claim 4, wherein the at least one water pocket (14) includes generally parallel inner and outer walls (15,16) which are generally rectangular with upper edges thereof connected to said tubular section (11b) and lower edges connected together, the side edges being interconnected by side walls (17), the inner and outer walls (15,16) lying in respective planes generally parallel to the length of said tubular section (11b) so that said emptying means (19,20,22,24) wrap the at least one water pocket (14) partially circumferentially around the tubular section (11b) to press the inner and outer walls (15,16) against the tubular section (11b) to empty water therefrom through at least one outlet (18) provided in the at least one water pocket (14).

6. A liferaft according to any one of claims 1 to 5 wherein the emptying means comprises at least one flexible elongate member (24) connected at one end to the water pocket (14) and tensioned on lifting of said liferaft by said lifting device (23) to lift the water pocket (14) to empty said water pocket (14).

7. A liferaft according to claim 6, when dependent on claim 5 wherein the elongate flexible member (24) acts to pull the associated water pocket (14) against the associated tubular section (11b) to empty the water pocket (14) of water.

8. A liferaft according to claim 7, wherein two flexible elongate members (24) are provided for the or each water pocket (14), each member (24) having said one end connected to a respective lower corner of the associated water pocket (14).

9. A liferaft according to any one of claims 1 to 8, wherein a plurality of water pockets (14) are provided spaced around the structure, emptying means (19,20,22,24) being associated with each said water pocket (14).

## Patentansprüche

1. Rettungsfloß mit einem Aufbau, der einen Boden und eine den Boden umgebende aufblasbare Wand (10) enthält, wobei mindestens eine Wassertasche (14) an dem Aufbau vorgesehen ist, die sich beim Aussetzen des Rettungsfloßes in Wasser zum Stabilisieren des Rettungsfloßes mit Wasser füllt, und Mittel (19, 20, 22, 24) zum Entleeren der mindestens einen Wassertasche (14) vorgesehen sind, um das Gewicht des Rettungsfloßes beim Herausheben des Rettungsfloßes aus dem Wasser zu verringern, dadurch gekennzeichnet, daß eine Anhebevorrichtung (23) vorgesehen ist, durch welche das Rettungsfloß aus dem Wasser herausgehoben werden kann, welche Anhebevorrichtung (23) wirksam mit den Entleerungsmitteln (19, 20, 22, 24) so verbunden ist, daß das Anheben des Rettungsfloßes durch das Anhebemittel (23) die Entleerungsmittel zum Entleeren der mindestens einen Wassertasche (14) betätigt.

2. Rettungsfloß nach Anspruch 1, bei dem die mindestens eine Wassertasche (14) unter der Struktur hängt, wenn das Rettungsfloß in Wasser ausgesetzt ist, die Wassertasche (14) mindestens einen Wassereinlaß (18) an ihrem oberen Ende enthält und das Entleerungsmittel (19, 20, 22, 24) Wasser durch den mindestens einen Einlaß nach außen abstößt.

3. Rettungsfloß nach Anspruch 1 oder 2, bei dem die Entleerungsmittel (19, 20, 22, 24) die Wassertasche (14) zum Entleeren der Wassertasche (14) anheben.

4. Rettungsfloß nach einem der Ansprüche 1 bis 3, bei dem die aufblasbare Wand einen rohrförmigen Abschnitt (11b) umfaßt, wobei die mindestens eine Wassertasche (14) dem rohrförmigen Abschnitt benachbart angeordnet ist, und die Entleerungsmittel (19, 20, 22, 24) veranlassen, daß die mindestens eine Wassertasche (14) gegen den rohrförmigen Abschnitt (11b) angedrückt wird, um das Wasser daraus auszustoßen.

5. Rettungsfloß nach Anspruch 4, bei dem die mindestens eine Wassertasche (14) allgemein parallele Innen- und Außenwände (15, 16) enthält, die allgemein rechtwinklig sind, wobei die oberen Enden derselben mit dem rohrförmigen Abschnitt (11b) verbunden und die unteren Kanten miteinander verbunden sind, während die Seitenkanten durch Seitenwände (17) miteinander verbunden sind, wobei die Innen- und Außenwände (15,16) in jeweiligen allgemein zur Längserstreckung des rohrförmigen Abschnitts (11b) parallelen Ebenen liegen, so daß die Entleerungsmittel (19,20,22,24) die mindestens eine Wassertasche (14) teilweise in Umfangsrichtung um den rohrförmigen Abschnitt (11b) umschlagen, um die Innen- und Außenwände (15,16) gegen den rohrförmigen Abschnitt (11b) anzudrücken, um Wasser durch den mindestens einen in der mindestens einen Wassertasche (14) vorgesehenen Auslaß (18) daraus zu entleeren.

6. Rettungsfloß nach einem der Ansprüche 1 bis 5, bei dem die Entleerungsmittel mindestens ein flexibles längliches Teil (24) umfassen, das an einem Ende mit der Wassertasche (14) verbunden ist und beim Anheben des Rettungsfloßes durch das Anhebegerät (23) gespannt wird, um die Wassertasche (14) zum Entleeren der Wassertasche (14) anzuheben.

7. Rettungsfloß nach Anspruch 6 in Abhängigkeit vom Anspruch 5, bei dem das längliche flexible Teil (24) zum Anziehen der zugehörigen Wassertasche (14) gegen den zugehörigen rohrförmigen Abschnitt (11b) zum Entleeren der Wassertasche (14) vom Wasser wirkt.

8. Rettungsfloß nach Anspruch 7, bei dem zwei flexible längliche Teile (24) für die oder jede Wassertasche (14) vorgesehen sind, von denen jedes Teil (24) mit dem einen Ende mit einer jeweiligen unteren Ecke der zugehörigen Wassertasche (14) verbunden ist.

9. Rettungsfloß nach einem der Ansprüche 1 bis 8, bei dem eine Vielzahl von Wassertaschen (14) mit Abstand um die Struktur vorgesehen ist, wobei Entleerungsmittel (19,20,22, 24) jeder dieser Wassertaschen (14) zugeordnet sind.

## Revendications

1. Radeau de sauvetage comprenant une structure incluant un plancher et une paroi gonflable (10) entourant le plancher, au moins une poche à eau (14) qui se remplit d'eau lors du déploiement du radeau de sauvetage dans l'eau étant prévue sur la structure pour stabiliser le radeau de sauvetage, des moyens (19, 20, 22, 24) étant prévus pour vider la ou les poches à eau (14) pour réduire le poids du radeau de sauvetage lors du soulèvement du radeau de sauvetage hors de l'eau, caractérisé en ce qu'il est prévu un dispositif de levage (23) par lequel le radeau de sauvetage peut être soulevé hors de l'eau, ledit dispositif de levage (23) étant relié de manière opérationnelle aux dits moyens de vidange (19, 20, 22, 24) de telle sorte que le soulèvement dudit radeau de sauvetage par lesdits moyens de levage (23) actionne lesdits moyens de vidange afin de vider la ou les poches à eau (14).

2. Radeau de sauvetage selon la revendication 1, dans lequel la ou les poches à eau (14) pendent au-dessous de la structure lorsque le radeau de sauvetage est déployé dans l'eau, la poche à eau (14) incluant au moins une entrée d'eau (18) à une extrémité supérieure de la poche et les moyens de vidange (19, 20, 22, 24) expulsant l'eau par ladite ou lesdites entrées.

3. Radeau de sauvetage selon la revendication 1 ou la revendication 2, dans lequel lesdits moyens de vidange (19, 20, 22, 24) soulèvent ladite poche à eau (14) pour vider ladite poche à eau (14).

4. Radeau de sauvetage selon l'une quelconque des revendications 1 à 3, dans lequel la paroi gonflable comprend une section tubulaire (11b), la ou les poches à eau (14) étant disposées en position adjacente à ladite section tubulaire, les moyens de vidange (19, 20, 22, 24) amenant la ou les poches à eau (14) à être pressées contre ladite section tubulaire (11b) pour en expulser l'eau.

5. Radeau de sauvetage selon la revendication 4, dans lequel la ou les poches à eau (14) comprennent des parois internes et externes (15, 16) sensiblement parallèles qui sont sensiblement rectangulaires avec des bords supérieurs reliés à ladite section tubulaire (11b) et des bords inférieurs reliés entre eux, les bords latéraux étant reliés entre eux par des parois latérales (17), les parois internes et externes (15, 16) étant situées dans des plans respectifs sensiblement parallèles à la longueur de ladite section tubulaire (11b) de sorte que lesdits moyens de vidange (19, 20, 22, 24) enveloppent la ou les poches à eau (14) partiellement suivant la circonférence autour de la section tubulaire (11b) pour presser les parois internes et externes (15, 16) contre la section tubulaire (11b) pour en vider l'eau par au moins une sortie (18) prévue dans la ou les poches à eau (14).

6. Radeau de sauvetage selon l'une quelconque des revendications 1 à 5, dans lequel les moyens de vidange comprennent au moins un élément allongé flexible (24) relié à une extrémité à la poche à eau (14) et tendu lors du soulèvement dudit radeau de sauvetage par ledit dispositif de levage (23) pour soulever la poche à eau (14) pour vider ladite poche à eau (14).

7. Radeau de sauvetage selon la revendication 6 lorsqu'elle dépend de la revendication 5 dans lequel l'élément flexible allongé (24) agit pour tirer la poche d'eau (14) associée contre la section tubulaire (11 b) associée pour vider l'eau de la poche à eau (14).

8. Radeau de sauvetage selon la revendication 7, dans lequel deux éléments allongés flexibles (24) sont prévus pour la ou chaque poche à eau (14), chaque élément (24) ayant ladite extrémité reliée à un coin inférieur respectif de la poche à eau (14) associée.

9. Radeau de sauvetage selon l'une quelconque des revendications 1 à 8, dans lequel il est prévu une pluralité de poches à eau (14) réparties autour de la structure, des moyens de vidange (19, 20, 22, 24) étant associés à chacune desdites poches à eau (14).
